(19) Europäisches Patentamt

European Patent Office

Office européen des brevets

(11) Veröffentlichungsnummer : **0 322 835 B1**

(12) **EUROPÄISCHE PATENTSCHRIFT**

(45) Veröffentlichungstag der Patentschrift :
26.04.95 Patentblatt 95/17

(51) Int. Cl.⁶ : **H02P 3/24**

(21) Anmeldenummer : **88121671.7**

(22) Anmeldetag : **24.12.88**

(54) **Bremsschaltung für mit mehreren Wechselstrommotoren, insb. schnellaufenden Wechselstrommotoren ausgerüsteten Werkzeugmaschinen.**

(30) Priorität : **25.12.87 DE 3744279**

(43) Veröffentlichungstag der Anmeldung :
**05.07.89 Patentblatt 89/27**

(45) Bekanntmachung des Hinweises auf die Patenterteilung :
**26.04.95 Patentblatt 95/17**

(84) Benannte Vertragsstaaten :
**DE FR GB IT**

(56) Entgegenhaltungen :
**DE-A- 3 419 757**
**DE-B- 1 413 851**
**DE-B- 2 646 893**
**US-A- 4 151 453**
**PATENT ABSTRACTS OF JAPAN, Band 3, Nr. 58 (E-111)(44), 18. Mai 1979 ; & JP-A-54 36 521**

(73) Patentinhaber : **Schröcker, Rainer, Dipl.-Ing.**
**Obere Burghalde 47**
**D-71229 Leonberg (DE)**

(72) Erfinder : **Schröcker, Rainer, Dipl.-Ing.**
**Obere Burghalde 47**
**D-71229 Leonberg (DE)**

(74) Vertreter : **Rüger, Rudolf, Dr.-Ing. et al**
**Patentanwälte**
**Dr.-Ing. R. Rüger**
**Dipl.-Ing. H.P. Barthelt**
**Webergasse 3**
**D-73728 Esslingen (DE)**

## Beschreibung

Die Erfindung betrifft eine Bremsschaltung für mit mehreren Wechselstrommotoren, insbesondere schnelllaufenden Wechselstrommotoren ausgerüstete Werkzeugmaschinen, mit einem eigangsseitig mit Wechselstrom beaufschlagten Gleichrichter, mit einem zu wenigstens einer Feldwicklung des Wechselstrommotors in Reihe geschalteten elektronischen Schalters, und mit einer zu der Feldwicklung des Wechselstrommotors parallelgeschalteten Freilaufdiode, wobei die Feldwicklung des Wechselstrommotors mit der von dem Gleichrichter gelieferten Spannung durch den elektronischen Schalter im gesteuerten Ein-/Ausbetrieb beaufschlagbar ist.

Werkzeugmaschinen, insbesondere Holzbearbeitungsmaschinen, werden gelegentlich mit sogenannten Schnellfrequenzmotoren betrieben, um die geforderten hohen Drehzahlen von 6000 bis 24.000 U/min ohne Getriebe zu erreichen. Den dazu notwendigen Drehstrom mit der entsprechend hohen Frequenz liefern rotierende Umformer.

Aufgrund geltender Unfallverhütungsvorschriften ist es erforderlich, die Antriebe dieser Holzbearbeitungsmaschinen mit automatisch wirkenden Bremssystemen auszustatten, bzw. die Werkzeugverkleidung bis zum vollständigen Werkzeugstillstand verriegelt zu halten.

Um die Auslaufzeit zu verkürzen, werden sowohl mechanische als auch verschiedene elektrische Bremsmethoden angewandt (siehe Bödefeld, Sequenz: "Elektrische Maschinen", Springer Verlag). Mechanische Bremsen sind jedoch nur für Motoren mit Nenndrehzahl bis zu ca. 6000 U/min einsetzbar; bei höheren Drehzahlen wird dieses Prinzip selten angewandt.

Eine sehr gebräuchliche, weil verschleißarme Bremsung ist die Gleichstrombremsung. Dabei wird die Feldwicklung des Motors vom Drehstromnetz abgekoppelt und mit Gleichstrom gespeist. Auf diese Weise entsteht in der Feldwicklung ein stillstehendes Magnetfeld. Bei der Drehung des Läufers werden in der kurzgeschlossenen Läuferwicklung Ströme hervorgerufen, die eine kräftige Bremsung des Motors bis zu seinem Stillstand bewirken.

Der zur Bremsung erforderliche Bremsstrom wird in der Regel durch gesteuerte Einweggleichrichtung mit Freilaufdiode aus dem Normalfrequenz-Drehstromnetz gewonnen. Aufgrund der niedrigen Wicklungswiderstände der Feldwicklungen sind bereits Bremsspannungen im Niedervoltbereich ausreichend , um den notwendigen Bremsstrom zu erreichen. Bei bekannten Anordnungen werden diese Niederspannungen durch eine Phasenanschnittsschaltung aus der 380 V Netzspannung erzeugt. Das Einstellen und Konstanthalten einer auf diese Weise gewonnenen kleinen Gleichspannung ist sehr schwierig bzw. aufwendig. Die Anforderungen an die Konstanz und Feineinstellbarkeit sind jedoch sehr hoch, da bereits geringe Spannungsänderungen den Verlauf der Bremsung stark beeinflussen. Außerdem ist ein durch Phasenanschnitt und Einweggleichrichtung gewonnener Gleichstrom sehr stark mit Oberwellen und mit Störspitzen behaftet. Ein derartiger Strom erzeugt ein zu ihm proportionales stark schwankendes Magnetfeld. Für die Bremsung ist jedoch nur der Gleichanteil maßgeblich. Da Wicklungen von Schnellfrequenzmotoren nur geringe Induktivitäten aufweisen dürfen, wird der mit Oberwellen und mit Störspitzen behaftete Bremsstrom durch die Feldwicklungen nur in geringem Maße geglättet. Aus dem Wechselanteil resultiert jedoch eine Erwärmung der wicklungen und ein pulsierendes Magnetfeld, das eine hohe mechanische Belastung und damit einen vorzeitigen Verschleiß der Motorenlager sowie eine unangenehme Geräuschentwicklung während des Bremsvorganges bewirkt.

Aus der DE OS 3 419 757 ist eine Schaltung bekannt, mit der Normalfrequenzmotoren (50/60 Hz) mittels Pulsbreitenmodulation gleichstromgebremst werden können. Da jedoch die Gleichspannung aus der üblichen 380 V Netzspannung abgeleitet wird, bestehen hier ähnliche wie die oben genannten Schwierigkeiten und Nachteile.

Aufgabe der Erfindung ist es daher, ein kostengünstiges System zur Mehrmotorenbremsung mit einzeln auf einfache Weise einstellbarem Bremsstrom zu schaffen, das bei maximalem Bremsmoment eine geringe mechanische und thermische Belastung der Motoren verursacht, wobei mit kleinerem Effektivwert das gleiche Bremsmoment wie mit einer Phasenanschnittsteuerung erreicht werden kann.

Die erfindungsgemäße Bremsschaltung ist durch die Merkmale des Anspruches 1 gekennzeichnet.

Da die mittels eines Transformators in den notwendigen Niedervoltbereich herabgesetzte Bremsspannung größere Stromflußwinkel ermöglicht, entsteht eine geringere Welligkeit im Stromverlauf. Ferner sind wegen der kleineren Spannung die Schaltverluste absolut und gegenüber der Bremsleitung kleiner. Der nutzbare Gleichanteil des Stromes ist bei vorgegebenem Effektivwert deswegen maximal, weil der störende Wechselanteil wegen der geringeren Oberwellenanteile minimal ist.

Gemäß einer bevorzugten Ausführungsform der Erfindung liefert der Transformator etwa eine Ausgangsspannung zwischen 2 V und 100 V, vorzugsweise zwischen 10 V und 48 V.

Da ein aus dem Drehstromnetz entnommener Dreiphasenstrom gegenüber einem Einphasenstrom eine geringere Welligkeit aufweist, ist es vorteilhaft, wenn der Transformator durch einen Drehstromtransformator

EP 0 322 835 B1

gebildet ist.

Wenn der elektronische Schalter durch eine Pulsweitenmodulationsschaltung ansteuerbar ist, dann ist der Bremsstrom auf einfache Weise einstellbar.

Um einer unangenehmen Geräuschentwicklung vorzubeugen, ist es vorteilhaft, wenn der elektronische Schalter durch die Pulsweitenmodulationsschaltung mit einem Signal beaufschlagt wird, das eine Frequenz oberhalb des hörbaren Frequenzbereiches (> 16 kHz) aufweist.

Die Schaltung ermöglicht eine Verwendung eines bipolaren Leistungstransistors mit niedriger Sperrspannung, der eine geringe Durchlaßspannung und ein schnelles Schaltverhalten zeigt.

Anstelle des bipolaren Leistungstransistors kann der elektronische Schalter auch durch einen selbstsperrenden Leistungs-MOS-Feldeffekttransistor gebildet sein. Derartige Transistoren weisen ein besonders schnelles Schaltverhalten auf.

Wenn die Werkzeugmaschine mit mehreren Bremsschaltungsstufen ausgerüstet ist, ist es zur Störspitzenunterdrückung vorteilhaft, jeder Serienschaltung aus einer Feldwicklung und einem elektronischen Schalter jeweils ein Kondensator parallelzuschalten.

Bei einer bevorzugten Ausführungsform ist jeweils wenigstens eine Feldwicklung mehrerer Wechselstrommotoren mit der an dem gemeinsamen Gleichrichter anstehenden Spannung durch jeweils einen getrennt ansteuerbaren, mit ihr in Serie geschalteten eigenen elektronischen Schalter im gesteuerten Ein-/Ausbetrieb beaufschlagbar.

Gemäß einer sehr einfachen und kostengünstigen Ausführungsform ist das Tastverhältnis der Pulsweitenmodulationsschaltung einstellbar.

Bei einer anderen Ausführungsform ist das Tastverhältnis der Pulsweitenmodulationsschaltung derart geregelt, daß der Scheitelwert des Bremsstromes einstellbar ist.

Auf diese Weise ist es sehr einfach möglich, in bereits bestehende Werkzeugmaschinen mit Motoren unterschiedlicher Kenndaten die erfindungsgemäße Bremsschaltung nachzurüsten, ohne daß an der Bremsschaltung selbst größere Eingriffe vorgenommen werden müssen.

Eine derartige Bremsschaltung weist vorteilhafterweise in der Pulsweitenmodulationsschaltung eine Vergleicherschaltung mit zwei Eingängen auf, von denen der eine Eingang mit einem Referenzsignal und der andere Eingang mit einem Signal beaufschlagt ist, das kennzeichend für den bei durchgeschaltetem Leistungstransistor fließenden Bremsstrom ist. Außerdem weist die Vergleicherschaltung einen Ausgang auf, der eine für den bei durchgeschalteten Leistungstransistor fließenden Bremsstrom kennzeichnende Signalgröße abgibt.

Für eine einfache Störsignalunterdrückung beim Einschalten des Bremsstromes weist eine derartige Pulsweitenmodulationsschaltung einen Impulsgenerator zum Erzeugen von periodischen Impulsen mit vorgebbarer Impulsbreite sowie einen setz- und rücksetzbaren Signalspeicher mit wenigstens zwei Eingängen und einem Ausgang auf, wobei der eine Eingang des Signalspeichers mit den von dem Impulsgenerator abgegebenen Impulsen und der andere Eingang des Signalspeichers mit der für den bei durchgeschaltetem Leistungstransistor fließenden Bremsstrom kennzeichnenden Signalgröße beaufschlagt ist und der Ausgang des Signalspeichers mit dem Steuereingang der Bremsschaltung verbunden ist. Auf diese Weise können nämlich Störsignale im Bremsstrom für eine vorgebbare Zeitdauer keinen Einfluß auf das dem Steuereingang des Leistungstransistors zugeführte Steuersignal ausüben. Insbesondere auftretende Einschaltstörspitzen des durch die Feldwicklung fließenden Stromes werden auf diese Weise ausgeblendet.

Um die von dem Impulsgenerator abgegebenen periodischen Impulse mit vorgebbarer Impulsbreite auf einfache Weise zu erzeugen, weist der Impulsgenerator einen Oszillator sowie einen nachgeschalteten Impulsformer auf.

Besonders einfache konstruktive Verhältnisse ergeben sich, wenn der Impulsformer durch eine Differenzierschaltung gebildet ist. Soll das Ansprechen der Bremsschaltung hörbar sein, so ist es vorteilhaft, wenn der Oszillator periodische Impulse mit einer Frequenz von etwa 2 kHz abgibt.

Sollen beim Beaufschlagen der Feldwicklung mit Bremsstrom auftretende Störimpulse unterdrückt werden, so ist es vorteilhaft, wenn mittels der Impulsformerschaltung die Impulsbreite der periodischen Impulse des Oszillators auf eine Zeitdauer eingestellt ist, die größer ist als die Zeitdauer von beim Beaufschlagen der Feldwicklung mit Bremsstrom auftretenden Störimpulsen. Vorteilhafterweise weist dazu der Impulsformer eine Zeitkonstante von etwa 2 $\mu$sec auf.

Um die Bremsschaltung stillsetzen zu können, ist es vorteilhaft, wenn der Ausgang des Signalspeichers mit einem ersten Eingang einer Sperreinrichtung verbunden ist, die einen zweiten Eingang und einen mit dem Steuereingang des Leistungstransistors verbundenen Ausgang aufweist und die Sperreinrichtung durch ein Signal an dem zweiten Eingang veranlaßbar ist, Impulse vom Ausgang des Signalspeichers nicht an den Steuereingang des Leistungstransistors weiterzuleiten.

In der Zeichnung ist die erfindungsgemäße Bremsschaltung dargestellt. Es zeigen:

Fig. 1 ein Prinzipschaltbild der Bremsschaltung,

Fig. 2 die Strom- und Spannungsverhältnisse an einer Feldwicklung eines Antriebsmotors,

Fig. 3 ein Prinzipschaltbild der Bremsschaltung mit zugehöriger getrennter Pulsweitenmodulationsschaltung,

Fig. 4 ein Prinzipschaltbild der Bremsschaltung für mehrere Antriebsmotoren und

Fig. 5 ein Prinzipschaltbild der Bremsschaltung mit zugehöriger geregelter Pulsweitenmodulationsschaltung.

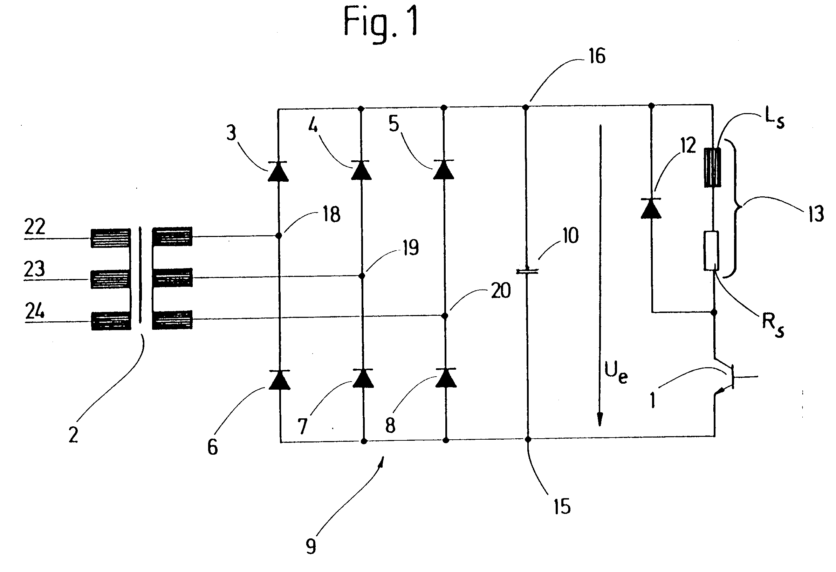

Die in Fig. 1 gezeigte Schaltung veranschaulicht ein Prinzipschaltbild einer Bremsschaltung für einen Elektromotor, insbesondere einen Drehstrom-Asynchronmotor, wobei zur Übersichtlichkeit die für die Umschaltung aus dem Motor- in den Bremsbetrieb notwendigen Schaltschütze mit ihrer zugehörigen Steuerschaltung und die Ansteuerschaltung für den Leistungstransistor 1 weggelassen sind.

Die Schaltung besteht aus einem Drehstromtransformator 2, einem aus Halbleiterdioden 3 ... 8 aufgebauten Drehstrombrückengleichrichter 9, dem ausgangsseitig zur Unterdrückung von Schaltspitzen ein Elektrolytkondensator 10 parallel geschaltet ist, und dem Leistungstransistor 1. Über dessen Emitter-Kollektorstrecke ist eine mit einer Freilaufdiode 12 überbrückte Feldwicklung 13 des Antriebsmotors mit Gleichspannungsausgangsanschlüssen 15, 16 des Drehstrombrückengleichrichters 9 verbindbar. Über die Basis des Leistungstransistors 1 wird der Bremsschaltung ein weiter unten erläutertes periodisches pulsweitenmoduliertes Steuersignal zugeführt.

Die Dioden 3 ... 8 bilden einen Brückengleichrichter 9 für Drehstrom. Dabei sind einerseits die Kathoden der Dioden 3, 4 und 5 unter Bildung des Ausgangs 16 und andererseits die Anoden der Dioden 6, 7 und 8 unter Bildung des Ausgangs 15 miteinander verbunden. Die Anode der Diode 3 ist mit der Kathode der Diode 6 verbunden, desgleichen liegen die Dioden 4 und 7 sowie die Dioden 5 und 8 mit ihren Anoden bzw. Kathoden auf jeweils gemeinsamem Potential. Der gemeinsame Kathodenpotentialpunkt 16 der Dioden 3, 4 und 5 bildet den positiven Ausgang und der gemeinsame Kathodenpotentialpunkt 15 der Dioden 6, 7 und 8 bildet den negativen Ausgang des Drehstrombrückengleichrichters 9. Den beiden Ausgängen 15, 16 ist der Elektrolytkondensator 10 mit ausreichender Impulsbelastbarkeit parallelgeschaltet. Zwischen den Ausgängen 15, 16 liegt eine Spannung $U_e$ an.

Die drei Anoden-Kathodenverbindungspunkte 18, 19 und 20 bilden drei Anschlusspunkte für die im Stern geschalteten Sekundärwicklungen des Drehstromtransformators 2. Primärseitig ist der Drehstromtransformator 2 über Anschlüsse 22, 23 und 24 mit dem 380 Volt-Drehstromnetz verbunden. Der hier eingesetzte Drehstromtransformator 2 ist ein üblicher Steuertrafo und gibt eine Sekundärspannung von 24 V ab. Selbstverständlich wäre es auch möglich, den Bremsstrom mittels eines Einphasentrafos zu gewinnen. Da aber für die Antriebsmotoren in der Regel eine Drehstromversorgung vorgesehen ist, außerdem der aus Drehstrom gewonnene Gleichstrom eine geringere Restwelligkeit aufweist, ist ein Drehstromtransformator zu bevorzugen.

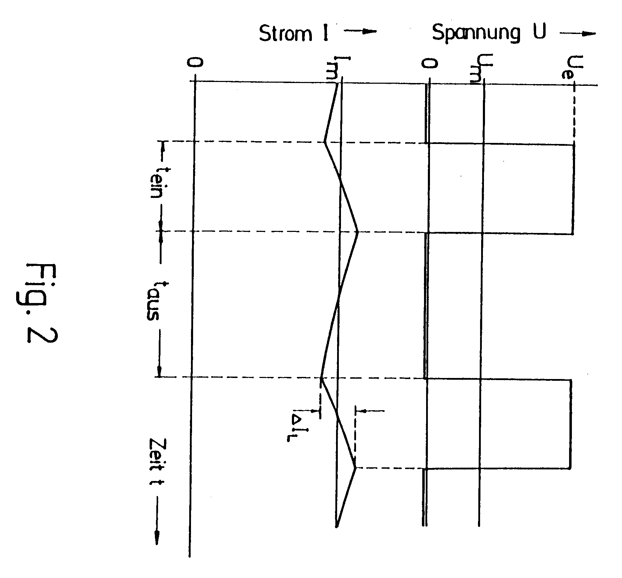

Die in Fig. 2 dargestellten Strom- und Spannungverhältnisse an der Feldwicklung 13 des Antriebsmotors gehen von der Annahme aus, daß die Feldwicklung 13 eine induktive Komponente $L_s$ und eine ohmsche Komponente $R_s$ aufweist. Bei gesperrtem Leistungstransistor 1 d.h. wenn an dessen Basis kein Steuersignal anliegt, fließt durch die Freilaufdiode 12 ein Freilaufstrom. Sobald die Basis des Leistungstransistors 1 mit einem periodischen Steuersignal beaufschlagt wird, entsteht der dargestellte Strom- und Spannungsverlauf an der Feldwicklung 13. Während der Einschaltzeit $t_{ein}$ liegt an der Feldwicklung 13 im wesentlichen die von dem Gleichrichter 9 abgegebene Spannung $U_e$. Während der Ausschaltzeit $t_{aus}$ wird durch die Freilaufdiode 12 eine durch Selbstinduktion entstehende Gegenspannung auf z.B. -0,7 V Flußspannung begrenzt. Die in Fig. 2 eingetragene Spannung $U_m$ entspricht dem arithmetischen Mittelwert der Bremsspannung.

Der Bremsstrom in der Feldwicklung 13 ermittelt sich nach dem Induktionsgesetz. Bei durchgeschaltetem Leistungstransistor 1 gilt für die Spannung an der (gedachten) Serienschaltung aus ohmscher Komponente $R_s$ und induktiver Komponente $L_s$ der Feldwicklung 13:

$$U_e = R \cdot I + L \cdot di/dt; \quad (1)$$

Die Lösung dieser Differentialgleichung lautet:

$$I = U_e/R(. (1 - e^{-t/\tau})); \quad (2)$$

wobei gilt: $\tau = L/R$.

Nach dem Einschalten des Leistungstransistors 1 steigt der Strom entsprechend einer Exponentialfunktion an, deren Asymptote $U_e/R$ beträgt. Nach dem Ausschalten des Leistungstransistors 1 induziert der fallende Strom eine Gegenspannung -L·di/dt, die den Freilaufstrom durch die Freilaufdiode 12 erzeugt. Dabei folgt der Strom ebenfalls einer (fallenden) Exponentialfunktion.

Der resultierende Stromverlauf ist in Fig. 2 gezeigt. Bei ausreichend hoher Steuersignalfrequenz nähert sich der resultierende Strom dem Mittelwert $I_m = U_m/R$. Allerdings sind bei zunehmender Schaltfrequenz auch die steigenden Schaltverluste zu berücksichtigen. Durch geeignete Wahl des Leistungstransistors 1 und der Freilaufdiode 12 sowie einen günstigen Schaltungsaufbau können die Schaltverluste gering gehalten werden.

Um unangenehme und störende Geräusche zu vermeiden, ist eine Schaltfrequenz oberhalb des Hörbereiches (> 16 kHz) vorteilhaft.

Bei hinreichend glattem Stromverlauf des resultierenden Stromes an dem Leistungsschalttransistors 1 und der Freilaufdiode 12 gelten für die Ströme:

Leistungstransistor 1:

$$I_{eff} = I_m / \sqrt{t_{ein}/T_{ges}} \ ; \quad (3)$$

Freilaufdiode 12:

$$I_{eff} = I_m / \sqrt{t_{aus}/T_{ges}} \ ; \quad (4)$$

wobei gilt:

$T_{ges}$ = 1/ Schaltfrequenz; und

$t_{aus}$ = $T_{ges}$ - $t_{ein}$.

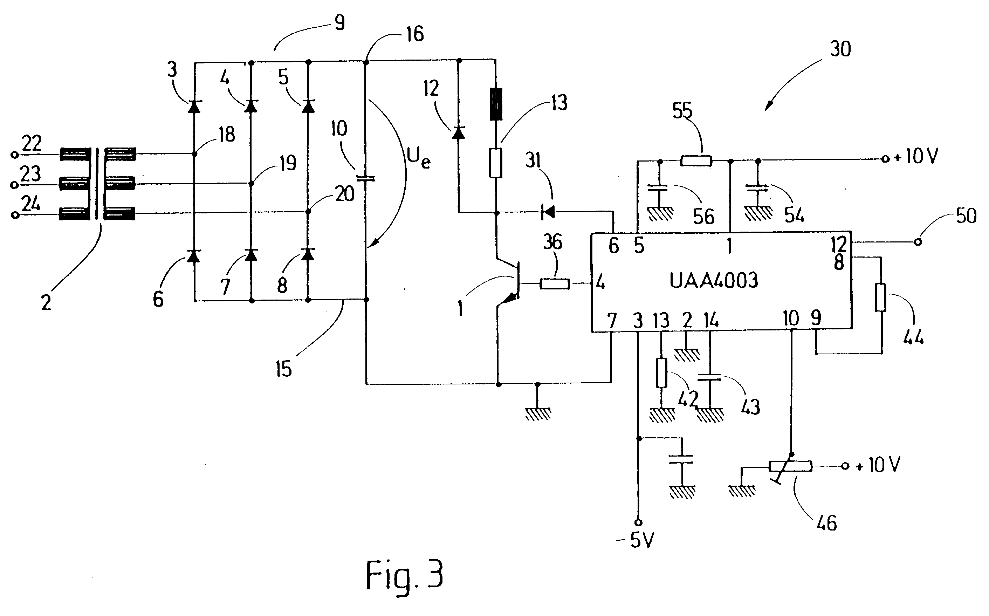

In Fig. 3 ist die Bremsschaltung mit zugehöriger gesteuerter Pulsweitenmodulationsschaltung veranschaulicht. Der Drehstromtransformator 2 hat eine Ausgangsspannung von 24 V. Das Steuersignal für den Leistungstransistor 1 wird dabei durch den integrierten Pulsweitenmodulator UAA 4003 von Thomson Semiconductors erzeugt. Dessen detaillierte Beschreibung ist dem Datenblatt UAA 4003 der Thomson Semiconductors GmbH zu entnehmen.

Gegenüber Fig. 1 gleichgebliebene Teile sind in der Fig. 3 mit gleichen Bezugszeichen versehen und nachstehend nicht nochmals erläutert.

Zur Verbesserung des Schaltverhaltens und der Flankensteilheit wird mit Hilfe einer Schaltdiode 31, die die Kollektorspannung des Leistungstransistors 1 durch den Pulsweitenmodulator UAA 4003 ermittelt, um eine Sättigung zu verhindern. Die Schaltdiode 31, deren Kathode mit dem Kollektoranschluß verbunden ist, ist anodenseitig mit einem Sensoreingang 6 des Pulsweitermodulators UAA 4003 verbunden, der die Kollektor-Emitter-Spannung des Leistungstransistors 1 überwacht und dementsprechend das über einen Widerstand 36 in die Basis des Leistungstransistors 1 eingespeiste pulsweitenmodulierte Steuersignal an dem Steuersignalausgang 4 des Pulsweitenmodulators UAA 4003 aussteuert.

Der auf Masse liegende Emitteranschluß ist mit dem Anschluß 15 des Gleichrichters 9 verbunden. Der Anschluß 7 des Pulsweitenmodulators UAA 4003 liegt auf Masse.

An den Anschlüssen Pin 13 und Pin 14 des Pulsweitenmodulators UAA 4003 sind jeweils ein die Frequenz des Steuersignales bestimmender Widerstand 42 und ein Kondensator 43 angeschlossen. Andernends liegen die beiden Bauelemente auf Massepotential. Mittels dieses RC-Netzwerkes ist eine maximale Arbeitsfrequenz Pulsweitenmodulators UAA 4003 von 50 kHz einstellbar. Dabei ergibt sich die Arbeitsfrequenz des Pulsweitenmodulators UAA 4003 gemäß der Formel:

$$f \frac{2}{R \cdot C} \quad (5)$$

Mittels des an den Anschlüssen Pin 8 und Pin 9 des Pulsweitenmodulators UAA 4003 anliegenden Widerstandes 44 ist das Übertragungsverhalten des integrierten Eingangsoperationsverstärkers festgelegt. Dessen invertierender Eingang Pin 9 ist über den Widerstand 44 mit dem an Pin 8 herausgeführten Ausgang des Eingangsoperationsverstärkers gegengekoppelt. Am Anschluß Pin 10 des Pulsweitenmodulators UAA 4003 ist der nichtinvertierende Eingang des Eingangsoperationsverstärkers herausgeführt. Dieser dient als Steuereingang zum Festlegen des Tastverhältnisses. Diese Spannung ist mittels eines zwischen Masse und + 10 Volt geschalteten einstellbaren Trimmpotentiometers 46 einstellbar und ist an dessen Schleiferanschluß abgegriffen.

Über einen Anschluß 50 ist der Rücksetzeingang Pin 12 des Pulsweitenmodulators UAA 4003 mit einer Bremsablaufsteuerung (nicht gezeigt) verbindbar. Ein niederes Potential am Anschluß 50 bewirkt, daß am Ausgang 4 des Pulsweitenmodulators UAA 4003 kein Steuersignal für die Bremsschaltung bereitgestellt wird.

Die Anschlüsse Pin 1 und Pin 2 des Pulsweitenmodulators UAA 4003 sind mit der Stromversorgung bzw. mit Masse verbunden. Ein Kondensator 54 dient der Entkopplung der Versorgungsspannung und ist entsprechend mit der Versorgungsspannung und dem Massepotential verbunden.

Über einen Widerstand 55 ist der Anschluß Pin 5 des Pulsweitenmodulators UAA 4003 an die Versorgungsspannung angeschlossen. Über Pin 5 wird eine interne Ausgangsendstufe mit Strom versorgt. Ein an Pin 5 und an Masse liegender Kondensator 56 dient dabei zur Entkopplung dieser Stromversorgung.

Wird nun der Schnellfrequenzmotor vom Motorbetrieb auf Bremsbetrieb (mittels nicht veranschalichter Umschalter) umgeschaltet, so speist der Pulsweitenmodulator UAA 4003 in den Leistungstransistor 1 ein Steuersignal mit einer Frequenz von etwa 20 kHz ein. Der dabei durch die Feldwicklung 13 des Motors fließenden Bremsstrom beträgt abhängig von zu bremsenden Schwungmasse bzw. der geforderten Auslaufzeit zwischen 1,5 und 50 Ampere.

Experimentelle Untersuchungen haben ergeben, daß mittels der neuen Bremsschaltung gegenüber der Phasenanschnittbremsung das gleiche Bremsmoment mit einem Strom mit kleinerem Effektivwert erzielbar ist. Dieses bedeutet eine entsprechende thermische und mechanische Minderbelastung des Schnellfrequenzmotors.

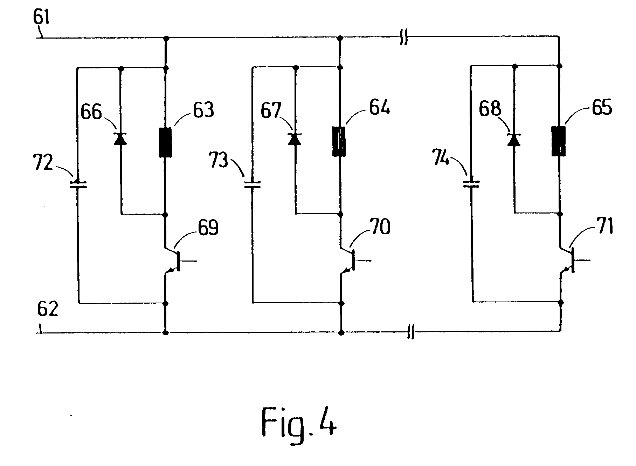

Die in Fig. 4 veranschaulichte Anordnung dient zum Abbremsen mehrerer Schnellfrequenzmotoren einer Werkzeugmaschine. Die mit 61 und 62 bezeichneten Anschlüsse entsprechen den Anschlüssen 15 bzw. 16 des Drehstromgleichrichters 9 der Fig. 1. Im übrigen entspricht diese Schaltung mehreren voneinander unabhängig mittels getrennter Pulsweitenmodulationsschaltungen ansteuerbaren Bremsschaltungen nach Fig. 1, wobei die Feldwicklungen der zu bremsenden Motoren mit 63, 64 und 65, die jeweiligen Freilaufdioden mit 66, 67 und 68 und die Leistungstransistoren mit 69, 70 und 71 bezeichnet sind. Die zugehörigen, mit 72, 73 und 74 bezeichneten Kondensatoren entsprechen dem Kondensator 10 aus Fig. 1.

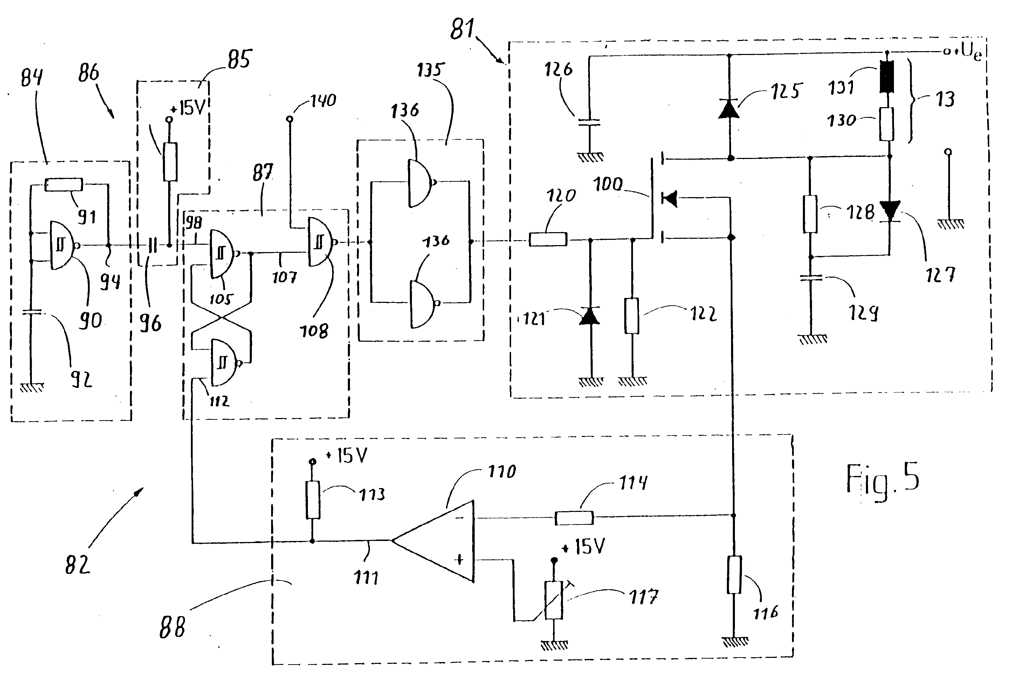

In Fig. 5 ist eine Bremsschaltung 81 mit zugehöriger geregelter Pulsweitenmodulationsschaltung 82 veranschaulicht. Die Gleichspannungsversorgung entspricht der in Fig. 3 dargestellten Anordnung und ist hier weggelassen. Die mit $U_e$ und Masse bezeichneten Anschlüsse entsprechen den Punkten 15 und 16 aus Fig.3.

Die veranschaulichte Pulsweitenmodulationsschaltung 82 gliedert sich in einen aus einem Oszillator 84 und einem Impulsformer 85 bestehenden Impulsgenerator 86, einen setz- und rücksetzbaren Signalspeicher 87 sowie eine Vergleicherschaltung 88.

Die durch die Pulsweitenmodulationsschaltung 82 angesteuerte Bremsschaltung 81 ist ähnlich wie die in Fig. 3 dargestellte Bremsschaltung aufgebaut, der Hauptunterschied besteht darin, anstatt eines bipolaren Leistungstransistors 1 einen selbstsperrenden Leistungs-MOS-Feldeffekttransistor 100 einzusetzen.

Der Oszillator 84 ist aus einem MOS-NAND-Schaltglied 90 mit Schmitt-Trigger-Charakteristik, einem Widerstand 91 und einem Kondensator 92 gebildet. Dabei ist der Widerstand 91 einerseits mit den beiden verbundenen Eingängen 93 des MOS-NAND-Schaltgliedes 90 und andererseits mit dessen Ausgang 94 verbunden. Der Kondensator 92 ist zwischen die beiden verbundenen Eingänge 93 des MOS-NAND-Schaltgliedes 90 und Masse geschaltet.

Liegt am Ausgang 94 des MOS-NAND-Schaltgliedes 90 eine log. "1", wird über den Widerstand 91 der Kondensator 92 aufgeladen, bis dessen Spannung (bezogen auf Masse) die obere Schwellenspannung der Schalthysterese des Schmitt-Triggers erreicht hat. In diesem Moment schaltet der Ausgang 94 des MOS-NAND-Schaltgliedes 90 auf log. "0" und der Kondensator 92 wird über den Widerstand 91 bis zur unteren Schwellenspannung des Schmitt-Triggers entladen, wo der Ausgang 94 des MOS-NAND-Schaltgliedes 90 wieder umschaltet. Dieser Vorgang wiederholt sich mit einer von der Dimensionierung des Widerstandes 91 und des Kondensators 92 abhängenden Frequenz. Um eine akustische Kontrolle des Bremsvorganges bereitzustellen, ist die Frequenz des Oszillators 86 auf etwa 2 kHz eingestellt.

An den Ausgang 94 des MOS-NAND-Schaltgliedes 105 ist der Impulsformer 85, bestehend aus einem Kondensator 96 und einem Widerstand 97 angeschlossen. Dabei ist der Kondensator 96 mit seinem vom Ausgang 94 des Oszillators 84 abliegenden Anschluß mit dem Widerstand 97 verbunden, der seinerseits als Pull-up-Widerstand für einen nachfolgenden Eingang 98 des Signalspeichers 87 einenends auf Betriebsspannungspotential +15 V liegt und andernends an dem gemeinsamen Knotenpunkt mit dem Kondensator 96 den Ausgang des Impulsformers 85 bildet.

Der Impulsformer 85 dient der Verschmälerung der von dem Oszillator 84 gelieferten Impulse. Die Impulsbreite dieser Impulse ergibt sich aus den Zeitkonstanten des aus dem Widerstand 97 und dem Kondensator 96 gebildeten RC-Hochpasses. Sie ist derart eingestellt, daß die Impulsbreite etwa 2 µsec beträgt. Dieser Wert ergibt sich aus der Zeitdauer der Überschwinger, die regelmäßig beim periodischen Einschalten des Leistungs-MOS-Feldeffekttransistors 100 im Sourcestrom auftreten.

An den Oszillator 86 schließt sich der setz- und rücksetzbare Signalspeicher 87 an, der aus einem RS-Flipflop 104 , bestehend aus zwei MOS-NAND-Schaltgliedern 105, 106 gebildet ist. Deren Ein- und Ausgänge sind in der bekannten Weise über Kreuz miteinander verbunden. An den Ausgang 107 des RS-Flipflops ist ausgangsseitig ein MOS-NAND-Schaltglied 108 als Sperreinrichtung angeschlossen, mit dem die Pulsweitenmodulationsschaltung abschaltbar ist.

Die den Regelkreis schließende Vergleicherschaltung 88 besteht aus einem als Komparator geschalteten Operationsverstärker 110, dessen Ausgang 111 mit einem Eingang 112 des Signalspeichers 87 und über einen Pull-Up-Widerstand 113 gegen Betriebsspannungspotential geklemmt ist. Der invertierende Eingang des Operationsverstärkers 112 ist über einen Widerstand 114 mit dem über einen verlustleistungsmäßig entsprechend dimensionierten Widerstand 116 auf Massepotential gelegten Sourceanschluß des selbstsperrenden Leistungs-MOS-Feldeffekttransistors 100 verbunden. Damit liegt am invertierenden Eingang des Operationsverstärkers 110 eine dem durch die Feldwicklung 13 fließenden Strom proportionale Spannung an. Der nichtinvertierende Eingang des Operationsverstärkers 112 dient als Referenzeingang und ist an einen Schleiferanschluß eines zwischen Masse und Betriebsspannungspotential gelegten Einstellpotentiometers 117 angeschlossen. Die Stellung des Einstellpotentiometers 117 legt die Schaltschwelle des Operationsverstärkers 112 fest.

An ihrem Eingang weist die Bremsschaltung 81 ein Netzwerk aus einem Widerstand 120, einer Diode 121 und einem Widerstand 122 auf. Dabei bildet der eine Anschluß des Widerstandes 120 den Eingangsanschluß; mit seinem anderen Ende ist er mit dem Kathodenanschluß des Diode 121 und einem Anschluß des Widerstandes 122 verbunden. Sowohl die Diode 121 als auch der Widerstand 122 sind andernends auf Massepotential gelegt. Der gemeinsame Knotenpunkt der Widerstände 120, 122 und der Diode 121 ist mit dem Gate-Anschluß des selbstsperrenden Leistungs-MOS-Feldeffekttransistor 100 verbunden. Der Substratanschluß des selbstsperrenden Leistungs-MOS-Feldeffekttransistor 100 ist mit seinem Source-Anschluß verbunden. Eine Diode 125 bzw. ein Kondensator 126 entsprechen der Diode 13 bzw. dem Kondensator 12 aus Fig. 3. Anodenseitig ist die Diode 125 mit dem Drainanschluß des selbstsperrenden Leistungs-MOS-Feldeffekttransistors 100 verbunden. Ihr Kathodenanschluß liegt auf Betriebsspannungspotential $U_e$. Der Kondensator 126 liegt einenends auf Masse und andernends ebenfalls auf Betriebsspannungspotential $U_e$. Zwischen dem Drain-Anschluß des selbstsperrenden Leistungs-MOS-Feldeffekttransistors 100 und Masse ist ein Netzwerk aus einer Diode 127 einem Widerstand 128 und einem Kondensator 129 geschaltet. Die Anordnung ist dabei derart getroffen, daß die Diode 127 anodenseitig zusammen mit dem einen Anschluß des Widerstandes 128 an dem Drain-Anschluß des selbstsperrenden Leistungs-MOS-Feldeffekttransistors 100 angeschlossen ist und kathodenseitig zusammen mit dem anderen Anschluß des Widerstandes 128 mit dem Kondensator 129 verbunden ist. Der andere Anschluß des Kondensators 129 liegt auf Massepotential. Zwischen dem Drain-Anschluß des selbstsperrenden Leistungs-MOS-Feldeffekttransistors 100 und Betriebsspannungspotential $U_e$ ist über nicht veranschaulichte Umschaltvorrichtungen eine der Feldwicklung 13 aus Fig. 3 entsprechende Spule 13 geschaltet, deren Ersatzschaltbild eine ohmsche Komponente 130 und eine induktive Komponente 131 enthält.

Lediglich zur Leistungsverstärkung dient die Verstärkerschaltung 135, die aus mehreren parallelgeschalteten MOS-Inverterschaltgliedern 136 zur Leistungsverstärkung und Polaritätsumkehr besteht. Die parallelgeschalteten Eingänge der MOS-Inverterschaltglieder 136 sind mit dem Ausgang des Signalspeichers 87 verbunden, die parallelgeschalteten Ausgängen der MOS-Inverterschaltglieder 136 sind mit dem Eingang der Bremsschaltung 81 verbunden.

Beim Übergang vom Motor- in den Bremsbetrieb ist der Leistungs-MOS-Feldeffekttransistor 100 zunächst abgeschaltet. Er wird durchgeschaltet, wenn ein niedriger Spannungspegel des von dem Impulsgenerator 86 kommenden Signales am Eingang 98 des Signalspeichers 87 und ein hoher Spannungspegel an dem Steuereingang 140 der Sperreinrichtung 108 anliegt.

Für die weitere Beschreibung sei angenommen, daß der Leistungs-MOS-Feldeffekttransistor 100 bereits eine Reihe von Schaltzyklen hinter sich hat und deswegen in dem von der Feldwicklung 13 und der Freilaufdiode 125 gebildeten Stromkreis ein Freilaufstrom fließt. Beim erneuten Einschalten des Leistungs-MOS-Feldeffekttransistors 100 wird deswegen der Freilaufstrom vom Leistungs-MOS-Feldeffekttransistor 100 übernommen und gleichzeitig entsteht wegen des Sperrverzugs der Diode 125 ein zusätzlicher Strom durch diese Diode 125, der sich zu dem Strom durch die Feldwicklung 13 hindurch hinzuaddiert. Die Folge davon ist eine Stromspitze, die deutlich über dem Strom durch die Feldwicklung 13 liegt. Erst nachdem die Diode 125 in den Sperrzustand übergegangen ist, wird durch den Leistungs-MOS-Feldeffekttransistor 100 nur noch der Feldstrom fließen.

An dem Widerstand 116 fällt eine dem Strom durch den Leistungs-MOS-Feldeffekttransistor 100 proportionale Spannung ab. Es wird deswegen der aufgrund des Sperrverzugs der Diode 125 fließende Strom eine entsprechende Einschaltstörimpulsspannung an dem Widerstand 116 erzeugen.

Liegt diese Einschaltstörimpulsspanung über der mittels des Einstellwiderstandes 114 eingestellten Referenzspannung, so wechselt das am Ausgang 111 des Operationsverstärkers 110 anstehende Ausgangssignal von einem hohen auf einen niedrigen Spannungspegel.

Ein niedriger Spannungspegel am Eingang 112 des Signalspeichers 87 würde das Ausgangssignal an dessen Ausgang dann umschalten, wenn an seinem Eingang 98 nicht noch ein niedriger Spannungspegel des von dem Impulsgenerator 86 kommenden Signales anstünde. Da jedoch die Zeitdauer, für die dieses Signal einen niedrigen Spannungspegel führt, größer bemessen ist, als die Zeitdauer der beim Einschalten des selbstsperrenden Leistungs-MOS-Feldeffekttransistors 100 auftretenden Stromspitze durch den Widerstand 116, verändert ein derartiger Störimpuls nicht das Ausgangssignal des Signalspeichers 87. Sobald der Störimpuls abgeklungen, also der ansteigenden Exponentialfunktion des durch die Feldwicklung 13 fließenden Stromes nicht mehr überlagert ist, wechselt das am Ausgang 111 des Operationsverstärkers 110 anstehende Ausgangssignal wieder von einem niedrigen auf einen hohen Spannungspegel. Erst wenn beim Anstieg des Sourcestromes die Spannung in dem Widerstand 116 über die an dem Einstellpotentiometer 117 eingestellte Referenzspannung erneut steigt, somit das am Ausgang 111 des Operationsverstärkers 110 anstehende Ausgangssignal von einem hohen auf einen niedrigen Spannungspegel wechselt und das von dem Impulsgenerator 86 kommende Signal einen hohen Spannungspegel aufweist, wechselt das Signal am Ausgang des Signalspeichers 87 von einem niedrigen auf einen hohen Spannungspegel.

Durch die in der Verstärkerschaltung 136 vorgenommene Polaritätsumkehr liegt dann an dem Eingang der Bremsschaltung 81 ein niedriger Spannungspegel an; der selbstsperrende Leistungs-MOS-Feldeffekttransistor 100 schaltet den Strom durch seine Drain-Sourcestrecke ab, woraufhin wieder der Freilaufstrom durch die Diode 125 fließt.

Beim nächsten Wechsel des Ausgangssignales des Impulsgenerators 86 von einem hohen auf einen niedrigen Pegel beginnt der oben beschriebene Vorgang von neuem.

Da die von der Vergleicherschaltung 88 abgegebene Signalgröße von der Stellung des Einstellpotentiometers 117 abhängt, ist der bei durchgeschaltetem Leistungstransistor 100 durch die Feldwicklung fließende Bremsstrom für verschiedene Motoren auf sehr einfache Weise durch Verstellen des Schleifers des Einstellpotentiometers 117 festlegbar.

Selbstverständlich kommen für die Realisierung des Impulsgenerators 86 und des Impulsspeichers 87 auch andere Ausführungsformen in Frage; so ist es bspw. möglich, einen Oszillator und ein nicht retriggerbares Monoflop mit entsprechender Einschaltdauer einzusetzen.

Die dargestellte Bremsschaltung hat außerdem den Vorteil, daß der Effektivwert des fließenden Bremsstromes weniger steil von der Änderung des Stromflußwinkels abhängig ist. Die Schaltung ist deswegen weniger empfindlich gegen Schwankungen im Stromflußwinkel.

**Patentansprüche**

1. Bremsschaltung für schnellaufende, insbesondere mit Drehzahlen zwischen 6.000 und 24.000 U/min laufende Wechselstrommotoren bei Werkzeugmaschinen,

    mit einem eingangsseitig mit Wechselstrom beaufschlagten Gleichrichter,

    mit einem zu wenigstens einer Feldwicklung des Wechselstrommotors in Reihe geschalteten elektronischen Schalter und

    mit einer zu der Feldwicklung des Wechselstrommotors parallelgeschalteten Freilaufdiode,

    wobei zur Erzeugung eines für das Bremsen erforderlichen arithmetischen Gleichstrommittelwerts ($I_m$) die Feldwicklung des Wechselstrommotors mit der von dem Gleichrichter gelieferten Gleichspannung durch den elektronischen Schalter (1,100) im gesteuerten Ein-/Ausbetrieb beaufschlagt ist und die Läuferwicklung im Bremsbetrieb kurzgeschlossen ist, dadurch gekennzeichnet;

    daß dem Gleichrichter (9) zur Vergrößerung des Stromflußwinkels des in die Feldwicklung (13) eingespeisten Stromes bei festgelegtem arithmetischem Mittelwert dem Gleichrichter (9) eingangsseitig ein mit Netzspannung beaufschlagter Transformator (2) vorgeschaltet ist, der an seinem Ausgang eine Spannung an den Gleichrichter (9) abgibt, die kleiner als die in dem Transformator (2) eingespeiste Netzspannung ist, um verglichen mit Bremsschaltungen ohne Transformator mit einem Strom mit kleinerem Effektivwert auszukommen und

    daß der elektronische Schalter ein bipolarer Leistungstransistor (1) oder ein selbtsperrender Leistungs-MOS-Feldeffekttransitor (100) ist.

2. Bremsschaltung nach Anspruch 1, dadurch gekennzeichnet, daß der Transformator (2) etwa eine Ausgangsspannung zwischen 2 V und 100 V, vorzugsweise zwischen 10 V und 48 V, liefert.

3. Bremsschaltung nach einem der vorhergehenden Ansprüche, dadurch gekennzeichnet, daß der Transformator durch einen Drehstromtransformator (2) gebildet ist.

4. Bremsschaltung nach einem der vorhergehenden Ansprüche, dadurch gekennzeichnet, daß der elektronische Schalter (1, 100) durch eine Pulsweitenmodulationsschaltung (30) angesteuert ist.

5. Bremsschaltung nach Anspruch 4, dadurch gekennzeichnet, daß der elektronische Schalter (1, 100) durch die Pulsweitenmodulationsschaltung (30) mit einem Signal beaufschlagt ist, das eine Frequenz oberhalb des hörbaren Frequenzbereiches ( >16 kHz) aufweist.

6. Bremsschaltung nach Anspruch 1, dadurch gekennzeichnet, daß der Serienschaltung aus der Feldwicklung (63,64,65) und dem elektronischen Schalter (69,70,71) ein Kondensator (72,73,74) parallelgeschaltet ist.

7. Bremsschaltung nach einem der vorhergehenden Ansprüche, dadurch gekennzeichnet, daß jeweils wenigstens eine Feldwicklung (63,64,65) mehrerer Wechselstrommotoren mit der an dem gemeinsamen Gleichrichter (9) anstehenden Spannung durch jeweils einen getrennt ansteuerbaren, mit ihr in Serie geschalteten eigenen elektronischen Schalter (69,70,71) im gesteuerten Ein-/Ausbetrieb beaufschlagbar ist.

8. Bremsschaltung nach Anspruch 4, dadurch gekennzeichnet, daß das Tastverhältnis der Pulsweitenmodulationsschaltung (30) einstellbar ist.

9. Bremsschaltung nach Anspruch 4, dadurch gekennzeichnet, daß das Tastverhältnis der Pulsweitenmodulationsschaltung (82) derart geregelt ist, daß der Scheitelwert des Bremsstroms einstellbar ist.

10. Bremsschaltung nach Anspruch 9, dadurch gekennzeichnet, daß die Pulsweitenmodulationsschaltung (82) eine Vergleicherschaltung (88) mit zwei Eingängen aufweist, von denen der eine Eingang mit einem Referenzsignal und der andere Eingang mit einem Signal beaufschlagt ist, das kennzeichnend für den bei durchgeschaltetem Leistungstransistor (1, 100) fließenden Bremsstrom ist, und daß die Vergleicherschaltung (88) einen Ausgang aufweist, der eine für den bei durchgeschaltetem Leistungstransistor (1, 100) fließenden Bremsstrom kennzeichnende Signalgröße abgibt.

11. Bremsschaltung nach Anspruch 9, dadurch gekennzeichnet, daß die Pulsweitenmodulationsschaltung (82) einen Impulsgenerator (84) zum Erzeugen von periodischen Impulsen mit vorgebbarer Impulsbreite sowie einen setz- und rücksetzbaren Signalspeicher (87) mit wenigstens zwei Eingängen und wenigstens einem Ausgang aufweist, daß der eine Eingang (98) des Signalspeichers (87) mit den von dem Impulsgenerator (86) abgegebenen Impulsen und der andere Eingang (112) des Signalspeichers (87) mit der für den bei durchgeschaltetem Leistungstransistor (1,100) fließenden Bremsstrom kennzeichnende Signalgröße beaufschlagt ist und daß der Ausgang des Signalspeichers (87) mit dem Steuereingang des Leistungstransistors (1,100) verbunden ist.

12. Bremsschaltung nach Anspruch 11, dadurch gekennzeichnet, daß der Impulsgenerator (86 ) einen Oszillator (84) sowie einen nachgeschalteten Inpulsformer (85) aufweist.

13. Bremsschaltung nach Anspruch 12, dadurch gekennzeichnet, daß der Impulsformer durch eine Differenzierschaltung (85) gebildet ist.

14. Bremsschaltung nach Anspruch 11, dadurch gekennzeichnet, daß der Oszillator (86) periodische Impulse mit einer Frequenz von etwa 2 kHz abgibt.

15. Bremsschaltung nach Anspruch 11, dadurch gekennzeichnet, daß die Impulse eine Zeitdauer aufweisen, die größer ist als die Zeitdauer von beim Beaufschlagen der Feldwicklung (13) mit Bremsstrom auftretenden Einschaltstörimpulsen.

16. Bremsschaltung nach Anspruch 15, dadurch gekennzeichnet, daß die Impulse eine Zeitdauer von etwa 2 μsec aufweisen.

17. Bremsschaltung nach Anspruch 11, dadurch gekennzeichnet, daß mit dem Ausgang des Signalspeichers (87) ein erster Eingang einer Sperreinrichtung (108) verbunden ist, die einen zweiten Eingang (140) und einen mit dem Steuereingang des Leistungstransistors verbundenen Ausgang aufweist, und daß die Sperreinrichtung (108) durch ein Signal an den zweiten Eingang veranlaßbar ist, Sianale vom Ausgang des Signalspeichers (87) nicht an den Steuereingang des Leistungstransistors (1,100) weiterzuleiten.

## Claims

1. Brake circuit for fast-running a.c. motors for machine tools, in particular those running at rotational speeds of 6,000 and 24,000 revs/min., including:
   a rectifier supplied with alternating current on the input side,
   an electronic switch connected in series to at least one field winding of the a.c. motor, and
   a free wheeling diode connected in parallel to the field winding of the a.c. motor,
   wherein for generation of an arithmetic d.c. current mean value ($I_m$) required for braking, the field winding of the a.c. motor is energized with the d.c. voltage supplied by the rectifier by means of the electronic switch (1, 100) operated in controlled on/off mode of operation and the rotor winding is short-circuited in braking operation, characterised

in that a transformer (2) supplied with mains voltage is connected to the input of the rectifier (9) for increasing at a predetermined arithmetic means value the conducting period of the current fed into the field winding (13) in the case of a fixed arithmetic mean value, and at its output, said transformer (2) delivers a voltage to the rectifier (9), which is lower than the mains voltage fed into the transformer (2), in order to manage with a current having a lower RMS value compared with brake circuits without a transformer; and

in that the electronic switch is a bipolar high-power transistor (1) or an enhancement type high-power MOS field-effect transistor (100).

2.    Brake circuit according to claim 1, characterised in that the transformer (2) supplies an output voltage of between about 2 V and 100 V, preferably between 10 V and 48 V.

3.    Brake circuit according to one of the preceding claims, characterised in that the transformer is in the form of a rotary current transformer (2).

4.    Brake circuit according to one of the preceding claims, characterised in that the electronic switch (1,100) is actuated by a pulse-width modulation circuit (30).

5.    Brake circuit according to claim 4, characterised in that the electronic switch (1,100) is supplied via the pulse-width modulation circuit (30) with a signal, which has a frequency above the audible frequency range (> 16 k Hz).

6.    Brake circuit according to claim 1, characterised in that a capacitor (72, 73, 74) is connected in parallel to the series connection from the field winding (62,64,65) and the electronic switch (60,70,71).

7.    Brake circuit according to one of the preceding claims, characterised in that at least one respective field winding (63, 64, 65) of several a.c. motors may be powered in controlled on/off mode of operation with the voltage provided by the common rectifier (9) via its associated electronic switch (69, 70, 71), which may be separately actuated and is connected in series to it.

8.    Brake circuit according to claim 4, characterised in that the pulse duty factor of the pulse-width modulation circuit (30) is adjustable.

9.    Brake circuit according to claim 4, characterised in that the pulse duty factor of the pulse-width modulation circuit (82) is regulated in such a way that the peak value of the braking current is adjustable.

10.  Brake circuit according to claim 9, characterised in that the pulse-width modulation circuit (82) has a comparator circuit (88) with two inputs, of which one input is supplied with a reference signal and the other input is supplied with a signal which represents the brake current flowing when the high-power transistor (1, 100) is in its conducting state; and that the comparator circuit (88) has an output, which delivers an identifying signal size for the brake current flowing when the high-power transistor (1, 100) is in it conducting state.

11.  Brake circuit according to claim 9, characterised in that the pulse-width modulation circuit (82) has a pulse generator (84) for the generation of periodic pulses with predeterminable pulse width and also has a signal storage device (87), which may be set and reset and has at least two inputs and at least one output; that one input (98) of the signal storage device (87) is supplied with the pulses delivered by the pulse generator (86) and the other input (112) of the signal storage device (87) is supplied with the identifying signal value for the brake current flowing with the high-power transistor (1, 100) is in its conducting state and that the output of the signal storage device (87) is connected to the control input of the high-power transistor (1,100).

12.  Brake circuit according to claim 11, characterised in that the pulse generator (86) has an oscillator (84) and a pulse former (85) connected at the output side.

13.  Brake circuit according to claim 22, characterised in that the pulse former is in the form of a differentiator circuit (85).

**14.** Brake circuit according to claim 11, characterised in that the oscillator (86) delivers periodic pulses with a frequency of about 2 kHz.

**15.** Brake circuit according to claim 11, characterised in that the duration of the pulses is longer than the duration of the switch-on disturbing pulses occurring when the field winding (13) is supplied with brake current.

**16.** Brake circuit according to claim 15, characterised in that the duration of the pulses is about 2 $\mu$sec.

**17.** Brake circuit according to claim 11, characterised in that a first input of an inhibit device (108) is connected to the output of the signal storage device (87), said inhibit device (108) having a second input (140) and an output connected to the control input of the high-power transistor; and that the inhibit device (108) may be prompted by a signal at the second input not to pass signals from the output of the signal storage device (87) on to the control input of the high-power transistor (1, 100).

**Revendications**

**1.** Circuit de freinage pour des moteurs à courant alternatif tournant à grande vitesse, en particulier à des vitesses comprises entre 6 000 et 24 000 tr/min, sur des machines-outils, comprenant
un redresseur alimenté côté entrée en courant alternatif,
un interrupteur électronique monté en série avec au moins un enroulement d'inducteur du moteur à courant alternatif, et
une diode de roue libre montée en parallèle avec l'enroulement d'inducteur du moteur à courant alternatif,
l'enroulement d'inducteur du moteur à courant alternatif étant, en régime intermittent commandé, alimenté par la tension continue fournie par le redresseur, en passant par l'interrupteur électronique (1,100), et l'enroulement d'induit étant court-circuité en régime freinage, en vue de la production d'une valeur moyenne arithmétique ($I_m$) de courant continu, nécessaire pour le freinage, caractérisé par le fait qu'en vue de l'augmentation de l'angle de conduction du courant alimentant l'enroulement d'inducteur (13), la valeur moyenne arithmétique étant fixée, le redresseur (9) est précédé, côté entrée, d'un transformateur (2) alimenté par la tension du réseau fournissant à sa sortie, au redresseur (9) une tension qui est inférieure à la tension du secteur alimentant le transformateur (2), pour pouvoir se contenter, comparativement à des circuits de freinage sans transformateur, d'un courant d'une valeur effective plus faible, et
que l'interrupteur électronique est un transistor de puissance bipolaire (1) ou un transistor de puissance (100) à effet de champ du type MOS, à auto-extension.

**2.** Circuit de freinage suivant revendication 1, caractérisé par le fait que le transformateur (2) fournit à peu près une tension de sortie comprise entre 2 V et 100 V, de préférence entre 10 V et 48 V.

**3.** Circuit de freinage suivant l'une des revendications précédentes, caractérisé par le fait que le transformateur est constitué par un transformateur à courant triphasé (2).

**4.** Circuit de freinage suivant l'une des revendications précédentes, caractérisé par le fait que l'interrupteur électronique (1, 100) est commandé par un circuit de modulation de largeur d'impulsion (30).

**5.** Circuit de freinage suivant la revendication 4, caractérisé par le fait que l'interrupteur électronique (1, 100) reçoit, par le circuit de modulation de largeur d'impulsion (30), un signal qui présente une fréquence supérieure à la plage de fréquences audible (>16 kHz).

**6.** Circuit de freinage suivant la revendication 1, caractérisé par le fait qu'un condensateur (72, 73, 74) est monté en parallèle avec le montage série de l'enroulement d'inducteur (63, 64, 65) et de l'interrupteur électronique (69, 70, 71).

**7.** Circuit de freinage suivant l'une des revendications précédentes, caractérisé par le fait qu'au moins un enroulement d'inducteur (63, 64, 65) de chacun parmi plusieurs moteurs à courant alternatif est alimenté, en régime intermittent commandé, par la tension fournie par le redresseur commun (9) respectivement par l'intermédiaire d'un interrupteur électronique propre, commandé séparément, monté en série avec ledit enroulement.

8. Circuit de freinage suivant la revendication 4, caractérisé par le fait que le rapport cyclique du circuit de modulation de largeur d'impulsion (30) est réglable.

9. Circuit de freinage suivant la revendication 4, caractérisé par le fait que le rapport cyclique du circuit de modulation de largeur d'impulsion (82) est régulé de telle manière que la valeur de crête du courant de freinage soit réglable.

10. Circuit de freinage suivant la revendication 9, caractérisé par le fait que le circuit de modulation de largeur d'impulsion (82) présente un circuit comparateur (88) avec deux entrées dont l'une reçoit un signal de référence et l'autre un signal qui est caractéristique pour le courant de freinage circulant lorsque le transistor de puissance (1, 100) est conducteur, et que le circuit comparateur (88) présente une sortie qui fournit une grandeur de signal caractéristique pour le courant de freinage circulant lorsque le transistor de puissance (1, 100) est conducteur.

11. Circuit de freinage suivant la revendication 9, caractérisé par le fait que le circuit de modulation de largeur d'impulsion (82) présente un générateur d'impulsions (84) pour produire des impulsions périodiques de largeur d'impulsion prédéterminable ainsi qu'une mémoire de signaux (87) positionnable et repositionnable avec au moins deux entrées et au moins une sortie, que l'une des sorties (98) de la mémoire de signaux (87) reçoit les impulsions fournies par le générateur d'impulsion (86) et l'autre entrée (112) de la mémoire de signaux (87) reçoit la grandeur de signal caractéristique pour le courant de freinage circulant lorsque le transistor de puissance (1, 100) est conducteur, et que la sortie de la mémoire de signaux (87) est reliée à l'entrée de commande du transistor de puissance (1, 100).

12. Circuit de freinage suivant la revendication 11, caractérisé par le fait que le générateur d'impulsions (86) présente un oscillateur (84) suivi d'un conformateur d'impulsions (85).

13. Circuit de freinage suivant la revendication 12, caractérisé par le fait que le conformateur d'impulsions est formé par un circuit de différenciation (85).

14. Circuit de freinage suivant la revendication 11, caractérisé par le fait que l'oscillateur (86) fournit des impulsions périodiques d'une fréquence d'environ 2 kHz.

15. Circuit de freinage suivant la revendication 11, caractérisé par le fait que les impulsions présentent une durée qui est plus grande que la durée d'impulsions parasites de fermeture apparaissant lors de l'alimentation de l'enroulement d'inducteur (13) avec du courant de freinage.

16. Circuit de freinage suivant la revendication 15, caractérisé par le fait que les impulsions présentent une durée d'environ 2 μs.

17. Circuit de freinage suivant la revendication 11, caractérisé par le fait qu'à la sortie de la mémoire de signaux (87) est reliée une première entrée d'un dispositif de blocage (108) qui présente une deuxième entrée (140) et une sortie reliée à l'entrée de commande du transistor de puissance, et que le dispositif de blocage (108) est amené, par un signal à la deuxième entrée, à ne pas transmettre à l'entrée de commande du transistor de puissance (1, 100) des signaux de la mémoire de signaux (87).

Fig. 1

EP 0 322 835 B1

Fig. 2

Fig. 3

Fig.4

EP 0 322 835 B1

Fig. 5